# EUROPÄISCHE PATENTANMELDUNG

(11) **EP 3 453 242 A1**
(43) Veröffentlichungstag der Anmeldung: **13.03.2019**
(21) Anmeldenummer: 18401078.3
(22) Anmeldetag: 28.08.2018
(51) Int. Cl.: A01C 21/00, A01C 17/00

(54) **VERFAHREN ZUM AUSBRINGEN VON STREUGUT**

(30) Priorität: 11.09.2017 DE 102017120872
(71) Anmelder: Amazonen-Werke H. Dreyer GmbH & Co. KG, 49205 Hasbergen (DE)
(72) Erfinder: Rahe, Florian, 49504 Lotte (DE)

(57) **Zusammenfassung**

Die Erfindung betrifft ein Verfahren zum Ausbringen von Streugut (S) durch ein Streugerät (19=, mit den Schritten: Bereitstellen von Informationen zur Reaktionsträgheit des Streugeräts (10) für eine Steuerungseinrichtung (104), welche dazu eingerichtet ist, das Streubild des Streugeräts (10) zu steuern, wobei die Informationen zur Reaktionsträgheit des Streugeräts (10) Informationen zur Ansprechzeit (t1) des Streugeräts (10) umfassen und die Ansprechzeit (t1) des Streugeräts (10) die Zeitdauer betrifft, welche das Streugerät (10) benötigt, um ein dem Streugerät (10) bereitgestelltes Steuersignal (20) in einen abgeschlossenen Schaltvorgang zur Anpassung des Streubildes umzusetzen, und Schalten einer Streubildverstelleinrichtung (18) auf Grundlage eines dem Streugerät (10) bereitgestellten Steuersignals (20) zur Anpassung des Streubildes, wobei die Informationen zur Reaktionsträgheit des Streugeräts (10) zusätzlich Flugzeitinformationen des auszuwerfenden Streuguts (S) umfassen und die Flugzeitinformationen des auszuwerfenden Streuguts (S) die Flugdauer (t2) des Streuguts (S) nach dem Auswurf betreffen.

## Beschreibung

Die Erfindung betrifft ein Verfahren zum Ausbringen von Streugut nach dem Oberbegriff des Patentanspruchs 1, ein Streugerät zum Ausbringen von Streugut nach dem Oberbegriff des Patentanspruchs 10 und eine Ausbringkombination nach dem Oberbegriff des Patentanspruchs 11.

Bei der Ausbringung von Streugut, wie beispielsweise Dünger, ist in bestimmten Bereichen eines Feldes die Anpassung des Streugutauswurfs notwendig, damit eine Fehlausbringung des Streuguts vermieden wird. Insbesondere an Feldgrenzen oder im Bereich des Vorgewendes ist regelmäßig eine Veränderung des Streugutauswurfs erforderlich. Die Anpassung des Streugutauswurfs kann beispielsweise durch das Verändern der Arbeitsbreite des Streugeräts, das Verändern des Streufächers von einer oder mehreren Schleuderscheiben des Streugeräts und/oder das Verändern der auf eine oder mehrere Schleuderscheiben des Streugeräts aufgegebenen Streugutmenge erfolgen.

Dabei ist zu beachten, dass Streugeräte üblicherweise eine Reaktionsträgheit beim Umsetzen eines Steuersignals in einen abgeschlossenen Schaltvorgang aufweisen.

Beim Aussenden eines Steuersignals an eine Streubildverstelleinrichtung des Streugeräts, beispielsweise eine Teilbreitenschaltung, ist die Reaktionsträgheit des Streugeräts zu berücksichtigen, damit die verzögerte Umsetzung des Steuersignals durch die Streubildverstelleinrichtung keine Fehlausbringung von Streugut verursacht.

In der Druckschrift EP 2 417 848 A2 ist ein Ansatz zur Berücksichtigung der Reaktionsträgheit des Streugeräts beschrieben, wonach zur Erreichung einer gleichmäßigen Düngerverteilung die Positioniergeschwindigkeit des Dosierorgans des dort offenbarten Düngerstreuers zu berücksichtigen ist.

Aus den Druckschriften DE 10 2013 112 307 A1 und DE 10 2014 115 560 A1 ist es außerdem bekannt, dass bei der Steuerung von Arbeitsparametern einer Maschine eine systemimmanente Reaktionszeit der Maschine zu berücksichtigen ist.

Die bekannten Lösungen zur Steigerung der Präzision beim Ausbringen von Streugut führen jedoch in der Praxis nicht zu zufriedenstellenden Ergebnissen, da trotz der zuvor beschriebenen Maßnahmen weiterhin ausgeprägte Fehlausbringungen erfolgen.

Die der Erfindung zugrundeliegende Aufgabe besteht somit darin, die Präzision bei der Ausbringung von Streugut weiter zu steigern.

Die Aufgabe wird gelöst durch ein Verfahren der eingangs genannten Art, wobei die Informationen zur Reaktionsträgheit des Streugeräts, welche einer das Streubild des Streugeräts steuernden Steuerungseinrichtung bereitgestellt werden, zusätzlich Flugzeitinformationen des auszuwerfenden Streuguts umfassen und die Flugzeitinformationen des auszuwerfenden Streuguts die Flugdauer des Streuguts nach dem Abwurf betreffen.

Die Erfindung macht sich die Erkenntnis zunutze, dass neben der Ansprechzeit des Streugeräts, welche die Zeitdauer betrifft, die das Streugerät benötigt, um ein dem Streugerät bereitgestelltes Steuersignal in einen abgeschlossenen Schaltvorgang zur Anpassung des Streubildes umzusetzen, ebenfalls die Flugdauer des Streuguts bei der Reaktionsträgheit des Streugeräts zu berücksichtigen ist. Aufgrund der Vortriebsgeschwindigkeit des Streugeräts weist das von dem Streugerät erzeugte Streubild ebenfalls eine Vortriebsgeschwindigkeit auf, sodass es während der Flugdauer des Streuguts zu einer Verschiebung des Streubildes in die Bewegungsrichtung des Streugeräts kommt. Dadurch, dass die Informationen zur Reaktionsträgheit des Streugeräts auch Flugzeitinformationen des auszuwerfenden Streuguts umfassen, kann die beschriebene Streubildverschiebung bereits bei der Bereitstellung von Steuersignalen berücksichtigt werden, sodass es zu einer Steigerung der Ausbringpräzision kommt. Die Flugdauer des Streuguts entspricht der Zeit, welche das Streugut vom Verlassen einer Schleuderscheibe bis zum Auftreffen auf den Boden benötigt. Mithin entspricht die Flugdauer der Zeit, welche das Streugut vor dem Auftreffen auf den Boden fliegt.

In einer bevorzugten Ausführungsform des erfindungsgemäßen Verfahrens werden Informationen zu der Ansprechzeit des Streugeräts durch eine Messeinrichtung des Streugeräts oder mittels einer externen Messeinrichtung erfasst. Alternativ oder zusätzlich werden Flugzeitinformationen des auszuwerfenden Streuguts durch eine vor dem Ausbringen des Streuguts durchgeführte streugutbezogene Testroutine erfasst. Das Erfassen von Informationen zu der Ansprechzeit des Streugeräts durch eine Messeinrichtung des Streugeräts oder mittels einer externen Messeinrichtung kann beispielsweise das Versenden eines Testsignals und/oder das Erfassen und Vergleichen eines Sendezeitpunkts und eines Empfangszeitpunkts des Testsignals durch die Messeinrichtung des Streugeräts oder die externe Messeinrichtung umfassen. Das Erfassen von Flugzeitinformationen des auszuwerfenden Streuguts durch eine vor dem Ausbringen des Streuguts durchgeführte streugutbezogene Testroutine kann beispielsweise von dem Hersteller des Streugeräts oder einem Drittanbieter durchgeführt werden.

Darüber hinaus ist ein erfindungsgemäßes Verfahren bevorzugt, bei welchem Flugzeitinformationen des auszuwerfenden Streuguts anhand von Streuguteigenschaften und/oder den Streugutauswurf beeinflussenden Einstellparametern des Streugeräts berechnet werden, insbesondere durch die das Streubild des Streugeräts steuernde Steuerungseinrichtung. Die Streuguteigenschaften können dabei beispielsweise die Korngröße, das Korngewicht, die Kornform und/oder die Korndichte des Streuguts umfassen. Die den Streugutauswurf beeinflussenden Einstellparameter des Streugeräts können beispielsweise die Drehgeschwindigkeit einer oder mehrerer Schleuderscheiben des Streugeräts, den Aufgabepunkt des auf eine oder mehrere Schleuderscheiben aufgegebenen Streuguts, die aufgegebene Streugutmenge, die Schleuderscheibenkonfiguration und/oder den Schleuderscheibentyp umfassen. Anhand der Streuguteigenschaften und/oder der den Streugutauswurf beeinflussenden Einstellparameter können dann Flugzeitinformationen, wie etwa die voraussichtliche Flugdauer des Streuguts, abgeleitet werden.

Ferner ist ein erfindungsgemäßes Verfahren vorteilhaft, bei welchem das Berechnen von Flugzeitinformationen des auszuwerfenden Streuguts anhand von Streuguteigenschaften und/oder den Streugutauswurf beeinflussenden Einstellparametern das Berechnen eines Flugzeitwertes für das auszuwerfende Streugut auf Grundlage eines Wurfweitenkennwertes umfasst. Dadurch, dass die Berechnung der Flugzeitinformationen auf Grundlage eines Wurfweitenkennwertes erfolgt, wird der Aufwand für den Bediener wesentlich verringert, da dieser der Steuerungseinrichtung lediglich einen Wert bereitzustellen hat. Außerdem wird dem Hersteller des Streugeräts oder einem Drittanbieter auf diese Weise die Möglichkeit gegeben, Bedienern von entsprechenden Streugeräten verschiedene Wurfweitenkennwerte zur Verfügung zu stellen, auf deren Grundlage dann die Gerätekonfiguration erfolgen kann.

In einer anderen bevorzugten Ausführungsform des erfindungsgemäßen Verfahrens entspricht der Wurfweitenkennwert einer mittleren Wurfweite des Streuguts. Alternativ oder zusätzlich ist der Wurfweitenkennwert von einem montierten Schleuderscheibentyp, der eingestellten Konfiguration des Streugeräts, insbesondere der Drehgeschwindigkeit von zumindest einer Schleuderscheibe des Streugeräts, und/oder der eingestellten Schleuderscheibenkonfiguration abhängig. Die Konfiguration des Streugeräts kann neben der Drehgeschwindigkeit der zumindest einen Schleuderscheibe auch die Ausrichtung und/oder den Abstand der zumindest einen Schleuderscheibe von dem Boden berücksichtigen. Die Schleuderscheibenkonfiguration ist beispielsweise abhängig von der Anzahl, der Position, der Ausrichtung und/oder dem Zustand von auf der Schleuderscheibe angeordneten Wurfschaufeln, wobei hinsichtlich der Ausrichtung insbesondere die Anstellwinkel der Wurfschaufeln zu berücksichtigen sind. Außerdem stellt der Scheibendurchmesser der Schleuderscheibe einen wichtigen Parameter der Schleuderscheibenkonfiguration dar, da der Scheibendurchmesser der Schleuderscheibe die Abwurfgeschwindigkeit des Streuguts erheblich beeinflussen kann. Die sich aufgrund der eingestellten Gerätekonfiguration ergebende mittlere Wurfweite kann ein Bediener des Streugeräts beispielsweise über eine Eingabeeinrichtung, wie etwa einem Touchscreen, dem Streugerät bereitstellen. Ferner kann das Streugerät oder die Steuerungseinrichtung auch dazu eingerichtet sein, auf Grundlage der vorgenommenen Geräteeinstellungen und bereitgestellter Informationen zu dem auszuwerfenden Streugut die mittlere Wurfweite abzuleiten, insbesondere zu berechnen. Für die Ausbringung von Streugut haben sich unterschiedliche Schleuderscheibentypen in der Praxis durchgesetzt. Die unterschiedlichen Schleuderscheibentypen weisen voneinander abweichende Bauformen und/oder Konfigurationen auf, welche die Wurfweite des Streuguts beeinflussen. Somit kann auf Grundlage des verwendeten Schleuderscheibentyps ein Wurfweitenkennwert abgeleitet werden, welcher zur Berechnung des Flugzeitwertes Verwendung finden kann.

In einer anderen Ausführungsform des erfindungsgemäßen Verfahrens umfasst das Bereitstellen von Informationen zur Reaktionsträgheit des Streugeräts für die das Streubild des Streugeräts steuernde Steuerungseinrichtung das Senden von Informationen zur Ansprechzeit des Streugeräts und/oder der Flugzeitinformationen des auszuwerfenden Streuguts an die das Streubild des Streugeräts steuernde Steuerungseinrichtung und/oder das manuelle Eingeben der Informationen zu der Ansprechzeit des Streugeräts und/oder der Flugzeitinformationen des auszuwerfenden Streuguts durch einen Bediener. Wenn die Steuerungseinrichtung als Bestandteil eines das Streugerät ziehenden oder tragenden Fahrzeugs ausgebildet ist, kann beispielsweise das Streugerät selbst Informationen zu der eigenen Ansprechzeit und/oder Flugzeitinformationen des auszuwerfenden Streuguts an die Steuerungseinrichtung senden. Alternativ oder zusätzlich können die Informationen zur Ansprechzeit des Streugeräts und/oder die Flugzeitinformationen des auszuwerfenden Streuguts von einem externen Gerät, insbesondere kabellos, an die das Streubild des Streugeräts steuernde Steuerungseinrichtung gesendet werden. Das externe Gerät kann beispielsweise ein mobiles Endgerät sein, auf welchem eine entsprechende Anwendung installiert ist, wobei die Anwendung die Eingabe einer Streugerätkonfiguration und/oder die Auswahl eines Streuguts erlaubt. Ferner kann die Anwendung auch dazu eingerichtet sein, eine bereits an dem Streugerät vorgenommene Geräteeinstellung abzurufen und der das Streubild des Streugeräts steuernden Steuerungseinrichtung bereitzustellen.

Bevorzugt ist außerdem ein erfindungsgemäßes Verfahren, bei welchem die das Streubild des Streugeräts steuernde Steuerungseinheit Bestandteil eines das Streugerät ziehenden oder tragenden Fahrzeugs ist. Insbesondere ist das das Streugerät ziehende oder tragende Fahrzeug als Traktor ausgebildet. Vorzugsweise ist das Streugerät als Zentrifugaldüngerstreuer mit zwei nebeneinander angeordneten und rotierend antreibbaren Schleuderscheiben ausgebildet.

Ferner ist ein erfindungsgemäßes Verfahren vorteilhaft, bei welchem eine Verzögerungsdauer berechnet wird, um welche ein Steuersignal, mehrere oder sämtliche Steuersignale verfrüht dem Streugerät bereitzustellen sind, wobei das Berechnen der Verzögerungsdauer unter Berücksichtigung der Informationen zur Reaktionsträgheit des Streugeräts und der Vortriebsgeschwindigkeit des Streugeräts und/oder eines das Streugerät ziehenden oder tragenden Fahrzeugs erfolgt. Alternativ oder zusätzlich umfasst das erfindungsgemäße Verfahren das Bereitstellen eines oder mehrerer Steuersignale für das Streugerät, wobei das Bereitstellen des einen oder der mehreren Steuersignale für das Streugerät um die Verzögerungsdauer verfrüht erfolgt. Dadurch, dass das eine Steuersignal oder die mehreren Steuersignale dem Streugerät um die Verzögerungsdauer verfrüht bereitgestellt werden, erfolgt ein derart verfrühter Auswurf des Streuguts, dass die durch die Vortriebsgeschwindigkeit des Streugeräts verursachte Streubildverschiebung berücksichtigt wird, sodass die tatsächlich umgesetzte Ausbringpräzision gesteigert wird.

In einer anderen Ausführungsform des erfindungsgemäßen Verfahrens veranlasst das Steuersignal die Veränderung des Streubildes zumindest einer Schleuderscheibe des Streugeräts. Alternativ oder zusätzlich umfasst die Streubildverstelleinrichtung eine Teilbreitenschaltung. Ebenfalls kann das Steuersignal die Veränderung der Wurfweite zumindest einer Schleuderscheibe des Streugeräts veranlassen.

Die der Erfindung zugrunde liegende Aufgabe wird ferner durch ein Streugerät der eingangs genannten Art gelöst, wobei das Streugerät dazu eingerichtet ist, das Verfahren zum Ausbringen von Streugut nach einer der vorstehend beschriebenen Ausführungsformen auszuführen. Hinsichtlich der Vorteile und Modifikationen des erfindungsgemäßen Streugeräts wird auf die Vorteile und Modifikationen des erfindungsgemäßen Verfahrens verwiesen.

Die der Erfindung zugrunde liegende Aufgabe wird ferner durch eine Ausbringkombination der eingangs genannten Art gelöst, wobei die Ausbringkombination dazu eingerichtet ist, das Verfahren zum Ausbringen von Streugut nach einer der vorstehend beschriebenen Ausführungsformen auszuführen. Hinsichtlich der Vorteile und Modifikationen der erfindungsgemäßen Ausbringkombination wird auf die Vorteile und Modifikationen des erfindungsgemäßen Verfahrens verwiesen.

Weitere Einzelheiten der Erfindung sind der Figurenbeschreibung und den Zeichnungen zu entnehmen. Dabei zeigen
- Fig. 1: ein Ausführungsbeispiel einer erfindungsgemäßen Ausbringkombination während des Ausführens des erfindungsgemäßen Verfahrens; und
- Fig. 2: eine beim Ausführen des erfindungsgemäßen Verfahrens auftretende verfrühe Aussendung eines Steuersignals.

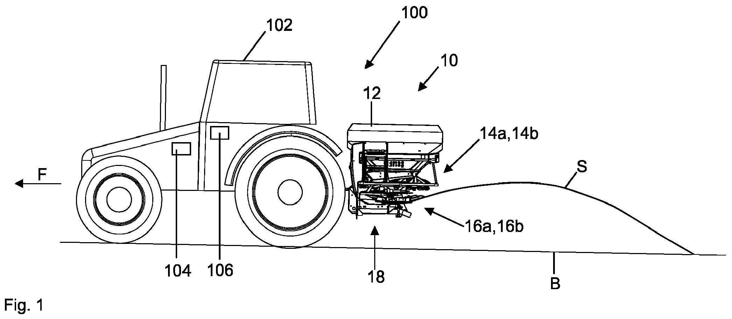

Die Fig. 1 zeigt eine Ausbringkombination 100 mit einem als Düngerstreuer ausgebildeten Streugerät 10 zum Ausbringen von Streugut S und einem als Traktor ausgebildeten und das Streugerät 10 tragenden Fahrzeug 102. Die Ausbringkombination 100 bewegt sich mit einer Vortriebsgeschwindigkeit in die Fahrtrichtung F.

Das als Düngerstreuer ausgebildete Streugerät 10 umfasst einen Vorratsbehälter 12 für das auszubringende Streugut S, zwei Dosierorgane 14a, 14b, zwei Schleuderscheiben 16a, 16b und eine Streubildverstelleinrichtung 18.

Der Vorratsbehälter 12 weist im unteren Bereich zwei nebeneinander angeordnete Zuführkammern auf, wobei das Streugut in einer ersten Zuführkammer dem Dosierorgan 14a und das Streugut in einer zweiten Zuführkammer dem Dosierorgan 14b zugeführt wird. Die Dosierorgane 14a, 14b sind ebenfalls nebeneinander angeordnet und dazu eingerichtet, die auf die Schleuderscheiben 16a, 16b aufzugebende Menge an Streugut S zu dosieren. Ferner kann der Aufgabepunkt des Streuguts S auf die Schleuderscheiben 16a, 16b mittels der Dosierorgane 14a, 14b eingestellt werden. Die Schleuderscheiben 16a, 16b werden rotierend angetrieben und sind nebeneinander angeordnet, wobei das Dosierorgan 14a dazu eingerichtet ist, Streugut S auf die Schleuderscheibe 16a aufzugeben und das Dosierorgan 16b dazu eingerichtet ist, Streugut S auf die Schleuderscheibe 16b aufzugeben. Das auf die Schleuderscheiben 16a, 16b aufgegebene Streugut S wird durch die Schleuderscheiben 16a, 16b beschleunigt und auf den Boden B ausgeworfen.

Die Streubildverstelleinrichtung 18 ist als Teilbreitenschaltung ausgebildet und dazu eingerichtet, die Streufächer der Schleuderscheiben 16a, 16b und somit das Streubild des Streugeräts 10 anzupassen. Eine Streubildanpassung ist beispielsweise an Feldkanten oder im Bereich des Vorgewendes notwendig, um eine Fehlausbringung des Streuguts S zu vermeiden. Die als Teilbreitenschaltung ausgebildete Streubildverstelleinrichtung 18 unterteilt die Arbeitsbreite des Streugeräts 10 in eine Mehrzahl von Teilbreiten. Durch das Schalten der Streubildverstelleinrichtung 18 kann eine oder können mehrere Teilbreiten von der Streugutausbringung temporär ausgeschlossen werden, sodass die Arbeitsbreite des Streugeräts 10 verändert wird.

Das als Traktor ausgebildete Fahrzeug 102 umfasst eine Steuerungseinrichtung 104 und eine Eingabeeinrichtung 106. Die Steuerungseinrichtung 104 ist dazu eingerichtet, die Streubildverstelleinrichtung 18 zur Veränderung des Streubildes des Streugeräts 10 zu steuern. Die Eingabeeinrichtung 106 umfasst einen Touchscreen, über welchen ein Bediener der Steuerungseinrichtung 106 steuerungsrelevante Informationen bereitstellen kann.

Vor dem Ausbringvorgang werden zunächst Informationen zur Reaktionsträgheit des Streugeräts 10 erfasst und der Steuerungseinrichtung 104 bereitgestellt. Die Informationen zur Reaktionsträgheit des Streugeräts 10 umfassen Informationen zur Ansprechzeit t1 des Streugeräts 10 und Flugzeitinformationen des auszuwerfenden Streuguts S. Die Ansprechzeit t1 des Streugeräts 10 betrifft die Zeitdauer, welche das Streugerät 10 benötigt, um ein dem Streugerät 10 bereitgestelltes Steuersignal 20 in einen abgeschlossenen Schaltvorgang zur Anpassung des Streubildes umzusetzen. Die Flugzeitinformationen des auszuwerfenden Streuguts S betreffen die Flugdauer t2 des Streuguts S nach dem Auswurf durch die Schleuderscheiben 16a, 16b.

Das Erfassen der Informationen zu der Ansprechzeit t1 des Streugeräts 10 kann bereits durch den Hersteller des Streugeräts 10 vor der Auslieferung erfolgt sein. Alternativ oder zusätzlich kann die Erfassung der Informationen zu der Ansprechzeit t1 des Streugeräts 10 auch durch den Bediener des Streugeräts 10 veranlasst werden, wobei zur Erfassung dann eine Messeinrichtung des Streugeräts 10 oder eine externe Messeinrichtung eingesetzt wird, welche die Ansprechzeit t1 ermittelt. Alternativ kann die Ansprechzeit t1 des Streugeräts 10 auch durch eine manuelle Eingabe über die Eingabeeinrichtung 104 des Fahrzeugs bereitgestellt werden, beispielsweise nachdem der Hersteller des Streugeräts 10 oder ein Drittanbieter dem Bediener entsprechende Informationen bereitgestellt hat. Das Erfassen der Flugzeitinformationen des auszuwerfenden Streuguts S kann beispielsweise durch eine vor dem Ausbringen des Streuguts S durchgeführte streugutbezogene Testroutine erfolgen. Die Testroutine kann von dem Hersteller des Streugeräts 10 oder von einem Drittanbieter durchgeführt werden. Alternativ können die Flugzeitinformationen des auszuwerfenden Streuguts S auch anhand von Streuguteigenschaften und/oder den Streugutauswurf beeinflussenden Einstellparametern des Streugeräts 10 berechnet werden, wobei hierzu ein Flugzeitwert für das auszuwerfende Streugut S auf Grundlage eines Wurfweitenkennwertes berechnet werden kann. Der Wurfweitenkennwert kann der mittleren Wurfweite des Streuguts S entsprechen und/oder von einem montierten Schleuderscheibentyp und/oder der eingestellten Drehgeschwindigkeit der Schleuderscheiben 16a, 16b abhängen.

Nachdem die Informationen zur Reaktionsträgheit des Streugeräts 10 ermittelt worden sind, werden diese an die das Streubild des Streugeräts 10 steuernde Steuerungseinrichtung 104 gesendet oder dieser durch manuelle Eingabe durch den Bediener bereitgestellt.

Nachdem der Steuerungseinrichtung 106 die Informationen zur Reaktionsträgheit des Streugeräts 10 mitgeteilt worden sind, wird eine Verzögerungsdauer berechnet, um welche die Steuersignale 20 verfrüht dem Streugerät 10 bereitzustellen sind, damit die Reaktionsträgheit des Streugeräts 10 nicht zu einer Fehlausbringung des Streuguts S führt. Die Berechnung der Verzögerungsdauer erfolgt unter Berücksichtigung der Informationen zur Reaktionsträgheit des Streugeräts 10 und der Vortriebsgeschwindigkeit des Fahrzeugs 102.

Wenn die Verzögerungsdauer bekannt ist, können die Steuersignale 20 der Streubildverstelleinrichtung 18 des Streugeräts 10 bereitgestellt werden, wobei das Bereitstellen der Steuersignale 20 um die Verzögerungsdauer verfrüht erfolgt, damit die Ansprechzeit t1 des Streugeräts 10 und die Flugdauer t2 des Streuguts kompensiert werden können.

Wenn die Steuersignale 20 durch die Streubildverstelleinrichtung 18 empfangen worden sind, wird der Schaltvorgang zur Anpassung des Streubildes des Streugeräts 10 durch Streubildverstelleinrichtung 18 initiiert. Das Steuersignal 20 kann dabei beispielsweise die Veränderung des Streubildes von einer Schleuderscheibe 16a, 16b oder von beiden Schleuderscheiben 16a, 16b des Streugeräts 10 veranlassen und eine oder mehrere Teilbreiten von der Streugutausbringung ausschließen oder eine oder mehrere Teilbreiten wieder in die Streugutausbringung integrieren.

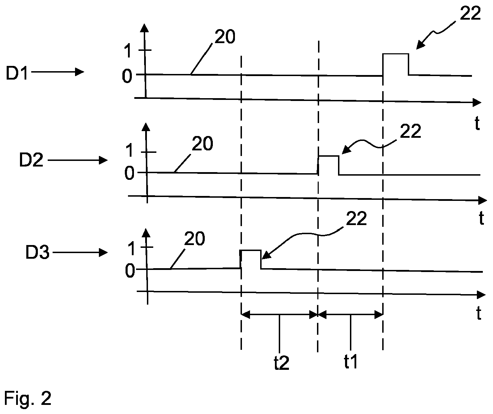

Die Fig. 2 zeigt drei Steuerungssignale 20, welche jeweils einen identischen Impuls 22 aufweisen. Der Impuls 22 steht stellvertretend für einen Steuerungsbefehl, welcher der Streubildverstelleinrichtung 18 zur Anpassung des Streubildes des Streugeräts 10 bereitgestellt werden soll.

Gemäß dem Diagramm D1 erfolgt die Aussendung des Impulses 22 ohne Berücksichtigung einer Ansprechzeit t1, welche das Streugerät 10 benötigt, um ein dem Streugerät 10 bereitgestelltes Steuersignal 20 in einen abgeschlossenen Schaltvorgang zur Anpassung des Streubildes umzusetzen, und ohne Berücksichtigung der Flugdauer t2 des Streuguts S nach dem Auswurf. Die Nichtberücksichtigung der Ansprechzeit t1 des Streugeräts 10 und der Flugdauer t2 des Streuguts S bedingen eine Fehlausbringung des Streugut S.

Gemäß dem Diagramm D2 erfolgt die Aussendung des Impulses 22 lediglich ohne Berücksichtigung der Flugdauer t2 des Streuguts S nach dem Auswurf. Die Ansprechzeit t1, welche das Streugerät 10 benötigt, um ein dem Streugerät 10 bereitgestelltes Steuersignal 20 in einen abgeschlossenen Schaltvorgang zur Anpassung des Streubildes umzusetzen, wird hingegen berücksichtigt, sodass eine entsprechend verfrühte Aussendung des Impulses 22 erfolgt. Die Nichtberücksichtigung der Flugdauer t2 des Streuguts S bedingt jedoch weiterhin eine Fehlausbringung des Streugut S.

Gemäß dem Diagramm D3, welches das Bereitstellen eines Steuersignals 20 gemäß der vorliegenden Erfindung betrifft, erfolgt die Aussendung des Impulses 22 sowohl unter Berücksichtigung der Ansprechzeit t1, welche das Streugerät 10 benötigt, um ein dem Streugerät 10 bereitgestelltes Steuersignal 20 in einen abgeschlossenen Schaltvorgang zur Anpassung des Streubildes umzusetzen, als auch unter Berücksichtigung der Flugdauer t2 des Streuguts S nach dem Auswurf, sodass eine nochmals verfrühte Aussendung des Impulses 22 erfolgt. Die Fehlausbringung des Streuguts S wird durch die Berücksichtigung der Ansprechzeit t1 des Streugeräts 10 und der Flugdauer t2 des Streuguts S minimiert.

### Bezugszeichenliste

- 10: Streugerät
- 12: Vorratsbehälter
- 14a, 14b: Dosierorgane
- 16a, 16b: Schleuderscheiben
- 18: Streubildverstelleinrichtung
- 20: Steuersignal
- 22: Impuls
- 100: Ausbringkombination
- 102: Fahrzeug
- 104: Steuerungseinrichtung
- 106: Eingabeeinrichtung
- F: Fahrtrichtung
- S: Streugut
- B: Boden
- D1-D3: Diagramme
- t1: Ansprechzeit
- t2: Flugdauer

## Patentansprüche

1. Verfahren zum Ausbringen von Streugut (S) durch ein Streugerät (10), mit den Schritten:
- Bereitstellen von Informationen zur Reaktionsträgheit des Streugeräts (10) für eine Steuerungseinrichtung (104), welche dazu eingerichtet ist, das Streubild des Streugeräts (10) zu steuern, wobei die Informationen zur Reaktionsträgheit des Streugeräts (10) Informationen zur Ansprechzeit (t1) des Streugeräts (10) umfassen und die Ansprechzeit (t1) des Streugeräts (10) die Zeitdauer betrifft, welche das Streugerät (10) benötigt, um ein dem Streugerät (10) bereitgestelltes Steuersignal (20) in einen abgeschlossenen Schaltvorgang zur Anpassung des Streubildes umzusetzen, und
- Schalten einer Streubildverstelleinrichtung (18) auf Grundlage eines dem Streugerät (10) bereitgestellten Steuersignals (20) zur Anpassung des Streubildes;
**dadurch gekennzeichnet, dass** die Informationen zur Reaktionsträgheit des Streugeräts (10) zusätzlich Flugzeitinformationen des auszuwerfenden Streuguts (S) umfassen und die Flugzeitinformationen des auszuwerfenden Streuguts (S) die Flugdauer (t2) des Streuguts (S) nach dem Auswurf betreffen.

2. Verfahren nach Anspruch 1,
**gekennzeichnet durch** zumindest einen der folgenden Schritte:
- Erfassen von Informationen zu der Ansprechzeit (t1) des Streugeräts (10) durch eine Messeinrichtung des Streugeräts (10) oder mittels einer externen Messeinrichtung;
- Erfassen von Flugzeitinformationen des auszuwerfenden Streuguts (S) durch eine vor dem Ausbringen des Streuguts (S) durchgeführte streugutbezogene Testroutine.

3. Verfahren nach Anspruch 1 oder 2,
**gekennzeichnet durch** den Schritt:
- Berechnen von Flugzeitinformationen des auszuwerfenden Streuguts (S) anhand von Streuguteigenschaften und/oder den Streugutauswurf beeinflussenden Einstellparametern des Streugeräts (10), insbesondere durch die das Streubild des Streugeräts (10) steuernde Steuerungseinrichtung (104).

4. Verfahren nach Anspruch 3,
**dadurch gekennzeichnet, dass** das Berechnen von Flugzeitinformationen des auszuwerfenden Streuguts (S) anhand von Streuguteigenschaften und/oder den Streugutauswurf beeinflussenden Einstellparametern des Streugeräts (10) den folgenden Schritt umfasst:
- Berechnen eines Flugzeitwertes für das auszuwerfende Streugut (S) auf Grundlage eines Wurfweitenkennwertes.

5. Verfahren nach Anspruch 4,
**dadurch gekennzeichnet, dass** der Wurfweitenkennwert einer mittleren Wurfweite des Streuguts (S) entspricht und/oder von einem montierten Schleuderscheibentyp, der eingestellten Konfiguration des Streugeräts (10), insbesondere der Drehgeschwindigkeit von zumindest einer Schleuderscheibe (16a, 16b) des Streugeräts (10), und/oder der eingestellten Schleuderscheibenkonfiguration abhängig ist.

6. Verfahren nach einem der vorstehenden Ansprüche,
**dadurch gekennzeichnet, dass** das Bereitstellen von Informationen zur Reaktionsträgheit des Streugeräts (10) für die das Streubild des Streugeräts (10) steuernde Steuerungseinrichtung (104) zumindest einen der folgenden Schritte umfasst:
- Senden der Informationen zur Ansprechzeit (t1) des Streugeräts (10) und/oder der Flugzeitinformationen des auszuwerfenden Streuguts (S) an die das Streubild des Streugeräts (10) steuernde Steuerungseinrichtung (104);
- Manuelles Eingeben der Informationen zu der Ansprechzeit (t1) des Streugeräts (10) und/oder der Flugzeitinformationen des auszuwerfenden Streuguts (S) durch einen Bediener.

7. Verfahren nach einem der vorstehenden Ansprüche,
**dadurch gekennzeichnet, dass** die das Streubild des Streugeräts (10) steuernde Steuerungseinrichtung (104) Bestandteil eines das Streugerät (10) ziehenden oder tragenden Fahrzeugs (102) ist.

8. Verfahren nach einem der vorstehenden Ansprüche,
**gekennzeichnet durch** zumindest einen der folgenden Schritte:
- Berechnen einer Verzögerungsdauer, um welche ein Steuersignal (20), mehrere oder sämtliche Steuersignale (20) verfrüht dem Streugerät (10) bereitzustellen sind, unter Berücksichtigung der Informationen zur Reaktionsträgheit des Streugeräts (10) und der Vortriebsgeschwindigkeit des Streugeräts (10) und/oder eines das Streugerät (10) ziehenden oder tragenden Fahrzeugs (102);
- Bereitstellen eines oder mehrerer Steuersignale (20) für das Streugerät (10), wobei das Bereitstellen des einen oder der mehreren Steuersignale (20) für das Streugerät (10) um die Verzögerungsdauer verfrüht erfolgt.

9. Verfahren nach einem der vorstehenden Ansprüche,
**dadurch gekennzeichnet, dass** das Steuersignal (20) die Veränderung des Streubildes zumindest einer Schleuderscheibe (16a, 16b) des Streugeräts (10) veranlasst und/oder die Streubildverstelleinrichtung (18) eine Teilbreitenschaltung umfasst.

10. Streugerät (10) zum Ausbringen von Streugut (S), insbesondere Düngerstreuer, mit
- einer Streubildverstelleinrichtung (18);
**dadurch gekennzeichnet, dass** das Streugerät (10) dazu eingerichtet ist, das Verfahren zum Ausbringen von Streugut (S) nach einem der vorstehenden Ansprüche auszuführen.

11. Ausbringkombination (100), mit
- einem Streugerät (10) zum Ausbringen von Streugut (S), welches insbesondere als Düngerstreuer ausgebildet ist; und
- einem das Streugerät (10) ziehenden oder tragenden Fahrzeug (102), welches insbesondere als Traktor ausgebildet ist, wobei das Fahrzeug (102) vorzugsweise eine Steuerungseinrichtung (104) umfasst, welche dazu eingerichtet ist, das Streubild des Streugeräts (10) zu steuern;
**dadurch gekennzeichnet, dass** die Ausbringkombination dazu eingerichtet ist, das Verfahren zum Ausbringen von Streugut (S) nach einem der Ansprüche 1 bis 9 auszuführen.
